Europäisches Patentamt

European Patent Office

Office européen des brevets

(11) Veröffentlichungsnummer: **0 070 918**
B1

# EUROPÄISCHE PATENTSCHRIFT

(45) Veröffentlichungstag der Patentschrift:
13.02.85

(21) Anmeldenummer: 81106731.3

(22) Anmeldetag: 28.08.81

(51) Int. Cl.⁴: **B 01 D 53/20**, F 28 F 25/08

(54) **Zylindrischer Füllkörper.**

(30) Priorität: **30.07.81 CH 4928/81**

(43) Veröffentlichungstag der Anmeldung:
**09.02.83 Patentblatt 83/6**

(45) Bekanntmachung des Hinweises auf die Patenterteilung:
**13.02.85 Patentblatt 85/7**

(84) Benannte Vertragsstaaten:
**DE FR GB IT NL SE**

(56) Entgegenhaltungen:
**DE - C - 853 159**
**FR - A - 542 902**
**FR - A - 2 019 870**
**GB - A - 764 896**

(73) Patentinhaber: **GEBRÜDER SULZER AKTIENGESELLSCHAFT, Zürcherstrasse 9, CH-8401 Winterthur (CH)**

(72) Erfinder: **Plüss, Raymond, Einfangstrasse 182, CH-8450 Klein-Andelfingen (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

## Beschreibung

Die Erfindung betrifft einen zylindrischen Füllkörper für Schüttungen in Kolonnen für Stoff- und direkten Wärmeaustausch gemäß Oberbegriff von Anspruch 1.

Derartige Füllkörper sind z. B. aus der FR-A-542 902 und der DE-C-853 159 bekannt, wonach der Durchmesser annähernd gleich groß wie ihre Höhe ist. Bei derartigen Abmessungen, wie sie beispielsweise auch Pallringe und Raschigringe zeigen, fallen die Füllkörper ohne Vorzugsrichtung, d. h. die Schüttung ist bezüglich der Anordnung der Füllkörper regellos und unkontrolliert. Dabei ist ein Teil derart in Kolonnen angeordnet, daß ihre Längsachse parallel zur Kolonnenachse gerichtet ist. Dieser Effekt ist bei bekannten Ausführungsformen, bei denen der Durchmesser größer ist als die Höhe, noch stärker ausgeprägt. Derartige Schüttungen weisen zwar relativ geringen Druckabfall für die Gasphase bei Rektifikationsverfahren auf, aber die abwärtsströmende Flüssigkeit fällt im wesentlichen durch die Füllkörper, so daß einerseits die für den Stoffaustausch zur Verfügung stehende Oberfläche relativ klein ist und außerdem weder eine seitliche Flüssigkeitsverteilung noch eine seitliche Gasverteilung über den Kolonnenquerschnitt stattfindet.

Die Erfindung hat es sich demgegenüber zum Ziel gesetzt, durch eine geeignete Ausbildung von Füllkörpern zu erreichen, daß gegenüber den bekannten Füllkörpern ein verbesserter Trenneffekt durch eine gute seitliche Verteilung der Gas- und Flüssigkeitsphase erreicht wird. Außerdem soll der Füllkörper einfach herstellbar sein.

Diese Aufgabe wird mit Hilfe der im Anspruch 1 angegebenen Maßnahmen erreicht.

Der Füllkörper kann einen kreisförmigen Querschnitt oder aber auch eine polygonartige, z. B. hexagonale Kontur aufweisen.

Erfindungsgemäß ausgebildete Füllkörper, deren Länge vorteilhaft das 1,5–2,5fache ihres Durchmessers beträgt, fallen bei der Schüttung im überwiegenden Fall so, daß ihre Längsachse senkrecht zur Kolonnenachse gerichtet ist. Somit kann angenähert eine Anordnung wie bei einer geordneten Packung entstehen, und die Flüssigkeit kann nicht frei durch sie hindurchfallen, sondern rieselt den Zungen und verbleibenden Mantelflächen entlang schräg nach unten.

Die Gasphase wird durch die Zungen und die in der Mantelfläche verbleibenden Abschnitte seitlich umgelenkt, so daß außer einer guten seitlichen Flüssigkeitsverteilung auch eine gute seitliche Gasverteilung erreicht wird.

Die Erfindung wird im folgenden anhand eines in der Zeichnung dargestellten Ausführungsbeispieles erläutert. Hierbei zeigt

Fig. 1 den abgewickelten Füllkörper,

Fig. 2 eine Draufsicht auf den Füllkörper und

Fig. 3 einen Querschnitt der Schnittlinie II-II der Fig. 2. In

Fig. 4 ist der Füllkörper in perspektivischer Darstellung gezeigt.

Der Füllkörper kann, insbesondere wenn er aus Blech besteht, aus einem einzigen Stück auf einfache Weise mit Hilfe von Stanz- und Biegevorgängen hergestellt werden.

Es sei noch erwähnt, daß der Füllkörper, im Falle er aus Plastik besteht, durch Spritzgießen hergestellt werden kann.

Im vorliegenden Ausführungsbeispiel sei der Fall betrachtet, daß der Füllkörper aus Blech besteht.

Aus einem Blechstreifen werden die rechteckigen Zungen 2 und Löcher 3 derart ausgestanzt, daß noch ein Rahmen 1a und Abschnitte 1b aufweisendes Gerüst verbleibt.

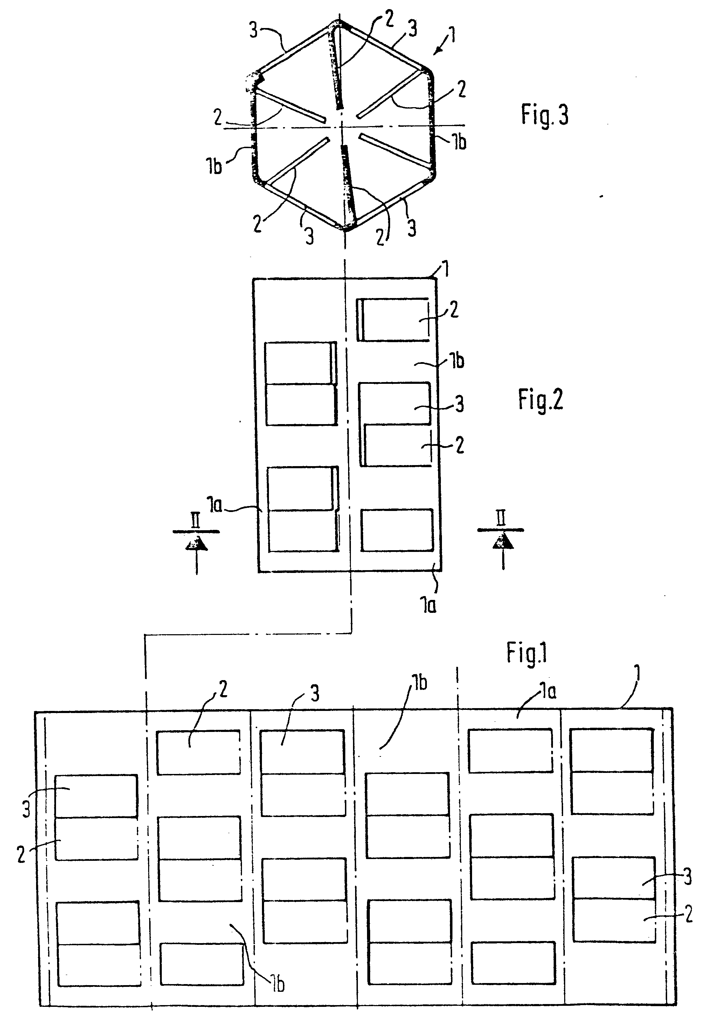

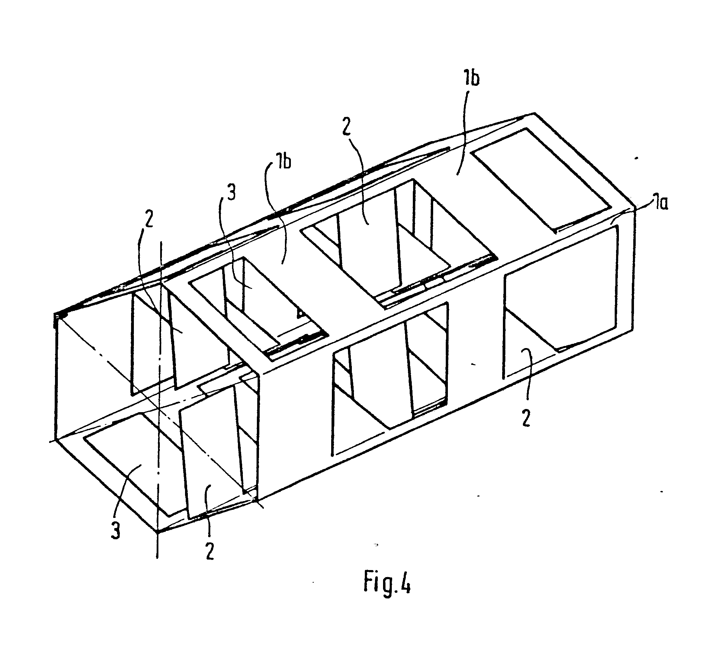

Sodann werden die Zungen aus der Blechebene herausgebogen und die so vorbereitete Mantelfläche 1 des Füllkörpers vom Blechstreifen abgeschnitten und zuletzt zum hexagonalen Füllkörper gebogen (vgl. Fig. 2, 3 und 4).

Es sei noch darauf hingewiesen, daß die Mantelfläche außer den Löchern 3 noch zusätzlich gelocht sein kann, wobei diese Löcher einen wesentlich kleineren Durchmesser als die Löcher 3 aufweisen.

## Patentansprüche

1. Zylindrischer Füllkörper für Schüttungen in Kolonnen für Stoff- und direkten Wärmeaustausch, welcher aus seiner Mantelfläche nach innen ragende Zungen aufweist, wobei entsprechende Lücken in der Mantelfläche bestehen bleiben, dadurch gekennzeichnet, daß die Länge des Füllkörpers mindestens das 1,5 bis 2fache seines Durchmessers beträgt.

2. Füllkörper nach Anspruch 1, dadurch gekennzeichnet, daß über einer Zungenbreite die Zungenflächen (2) sowie die verbleibenden Mantelflächen (1) im wesentlichen parallel zueinander und zur Längsachse des Füllkörpers liegen.

3. Füllkörper nach Anspruch 1, dadurch gekennzeichnet, daß die Zungen (2) auf die Längsachse des Füllkörpers gerichtet sind.

4. Füllkörper nach Anspruch 1, dadurch gekennzeichnet, daß jeweils zwei gegenüberliegende Zungen (2) in der gleichen Ebene liegen.

5. Füllkörper nach Anspruch 1, dadurch gekennzeichnet, daß mindestens drei Zungenpaare (2) in bezug auf die Längsachse hintereinander angeordnet sind.

6. Füllkörper nach Anspruch 1, dadurch gekennzeichnet, daß die Ebenen von hintereinander liegenden Zungen (2) einen Winkel einschließen, so daß für den Gasdurchtritt sich kreuzende Kanäle entstehen.

7. Füllkörper nach Anspruch 1 und 6, dadurch gekennzeichnet, daß die Zungenebenen benachbarter Zungen (2) gegeneinander um vorzugsweise 60° verschwenkt sind.

8. Füllkörper nach Anspruch 1, dadurch gekennzeichnet, daß die Mantelfläche (1) außer den Lücken (2) noch zusätzliche Löcher aufweist.

9. Füllkörper nach Anspruch 1, dadurch gekennzeichnet, daß die Zungen (2) rechteckig ausgeführt sind.

10. Füllkörper nach Anspruch 1, dadurch gekennzeichnet, daß sein Querschnitt eine polygonartige Kontur aufweist.

## Claims

1. A cylindrical packing element for packings in columns for mass transfer and direct heat exchange, the packing element having tongues projecting inwardly from its outer surface with corresponding gaps being left in the outer surface, characterised in that the length of the packing element is at least 1.5 times to twice its diameter.

2. A packing element according to claim 1, characterised in that over the width of one tongue the tongue surfaces (2) and the remaining outer surfaces (1) are substantially parallel to one another and to the longitudinal axis of the packing element.

3. A packing element according to claim 1, characterised in that the tongues (2) are directed towards the longitudinal axis of the packing element.

4. A packing element according to claim 1, characterised in that each pair of opposite tongues (2) are situated in the same plane.

5. A packing element according to claim 1, characterised in that at least three pairs of tongues (2) are disposed consecutively with respect to the longitudinal axis.

6. A packing element according to claim 1, characterised in that the planes of consecutive tongues (2) include an angle so that crossing ducts are formed for the passage of the gas.

7. A packing element according to claims 1 and 6, characterised in that the planes of adjacent tongues (2) are offset by preferably 60° relatively to one another.

8. A packing element according to claim 1, characterised in that the outer surface (1) has additional holes apart from the gaps (2).

9. A packing element according to claim 1, characterised in that the tongues (2) are rectangular.

10. A packing element according to claim 1, characterised in that its cross-section has a contour after the style of a polygon.

## Revendications

1. Corps cylindrique de remplissage pour garnissages dans des colonnes d'échange de matière et d'échange thermique direct, qui présente des languettes en saillie vers l'intérieur à partir de la surface de son enveloppe, des discontinuités correspondantes subsistant dans la surface de l'enveloppe, caractérisé par le fait que la longueur du corps de remplissage est comprise entre au moins 1,5 et 2 fois son diamètre.

2. Corps de remplissage selon la revendication 1, caractérisé par le fait que, sur une largeur de languette, les surfaces des languettes (2) ainsi que les surfaces restantes de l'enveloppe (1) s'étendent sensiblement parallèlement les unes aux autres et à l'axe longitudinal du corps de remplissage.

3. Corps de remplissage selon la revendication 1, caractérisé par le fait que les languettes (2) sont dirigées vers l'axe longitudinal du corps de remplissage.

4. Corps de remplissage selon la revendication 1, caractérisé par le fait que deux languettes opposées respectives (2) se trouvent dans le même plan.

5. Corps de remplissage selon la revendication 1, caractérisé par le fait qu'au moins trois paires de languettes (2) sont disposées les unes derrière les autres par rapport à l'axe longitudinal.

6. Corps de remplissage selon la revendication 1, caractérisé par le fait que les plans de languettes (2) situées les unes derrière les autres forment un angle, ce qui donne naissance à des canaux se croisant pour le passage traversant des gaz.

7. Corps de remplissage selon les revendications 1 et 6, caractérisé par le fait que les plans de languettes voisines (2) sont décalés mutuellement de 60° de préférence.

8. Corps de remplissage selon la revendication 1, caractérisé par le fait que la surface de l'enveloppe (1) présente des trous supplémentaires en plus des discontinuités (2).

9. Corps de remplissage selon la revendication 1, caractérisé par le fait que les languettes (2) sont réalisées rectangulaires.

10. Corps de remplissage selon la revendication 1, caractérisé par le fait que sa section présente une silhouette polygonale.

Fig. 3

Fig.2

Fig.1

Fig.4